# EUROPEAN PATENT SPECIFICATION

(11) **EP 0 950 546 B1**
(45) Date of publication and mention of the grant of the patent: **13.10.2004**
(21) Application number: 99106586.3
(22) Date of filing: 31.03.1999
(51) Int. Cl.: B60C 9/08, B60C 9/00, B60C 9/04

(54) **Tyres with high tranverse curvature coefficient, in particular for a two-wheeled vehicle**
Reifen mit hoher Querkrümmung, insbesondere für Zweirad-Fahrzeug
BANDAGE PNEUMATIQUE A HAUTE COURBURE TRANSVERSALE, EN PARTICULIER POUR VEHICULE A DEUX ROUES

(30) Priority: 16.04.1998 EP 98830231
(43) Date of publication of application: 20.10.1999
(73) Proprietor: PIRELLI PNEUMATICI S.p.A., 20126 Milano (IT)
(72) Inventor: Armellin, Giancarlo, 20054 Nova Milanese (MI) (IT)
(74) Representative: Giannesi, Pier Giovanni

(56) References cited:
- EP-A- 0 718 122
- EP-A- 0 756 949
- EP-A- 0 808 730
- EP-A- 0 860 302
- FR-A- 2 536 017
- PATENT ABSTRACTS OF JAPAN vol. 017, no. 524 (M-1483), 21 September 1993 (1993-09-21) & JP 05 139111 A (YOKOHAMA RUBBER CO LTD:THE), 8 June 1993 (1993-06-08)

## Description

The present invention relates to a tyre with a high transverse curvature coefficient, in particular suitable for fitting to motorcycles.

The invention relates in particular to tyres for two-wheeled vehicles, in which the transverse curvature coefficient, which in any case has a value of not less than 0.15, is greater in the front tyre than that of the corresponding rear tyre.

Even more particularly the invention relates to tyres which have a carcass with a radial structure and preferably have a cross-sectional ratio (H/C) ≤ 80% and/or are mounted on a mounting rim with a width ≥ 60% than the nominal chord of the tyre.

Generally tyres for motorcycles comprise a torus-shaped carcass with a central peripheral crown and two sidewalls terminating in a pair of beads for securing the tyre to a corresponding mounting rim, a tread extending coaxially around the peripheral crown and a belt structure arranged between the carcass and the tread.

The carcass in turn comprises at least one rubberized fabric ply provided with reinforcing cords which moreover are of the textile type.

The textile cords are identified by a numerical abbreviation which represents the count of the fibre used and the number of strands which combine to form the cord. "Strand" is understood as being a bundle of filaments or single filaments which are twisted together; "count" is understood as being the weight in grammes of a length of 10,000 metres of fibre, expressed in dtex units.

As is known, a two-wheeled vehicle, when travelling along a curved trajectory, inclines on the sidewall inside the bend at an angle, called the camber angle, the value of which can reach a value as high as 65° with respect to the plane perpendicular to the ground; this inclination produces on the part of the tyres a (camber) thrust which opposes the centrifugal force acting on the vehicle.

It is also known that, with an increase in speed and a decrease in the radius of curvature of the trajectory, the inclination of the vehicle alone is no longer sufficient to compensate for the effect of the centrifugal force, ensuring the stability of travel of the vehicle itself: an increase in the thrust exerted by the tyres is required, and this increase is obtained by varying the position of the vehicle with a manoeuvre, performed by the rider via the handlebars, usually known to experts as "push steering", i.e. inclining the rolling plane of the front tyre with respect to the direction tangential to the curved trajectory at an angle, called "slip angle", directed in the opposite direction to the curvature of the trajectory.

This therefore produces a total thrust which is the sum of a camber thrust resulting from the inclination of the equatorial plane of the tyre with respect to the vertical and a slip thrust caused by the angular variation in the rolling plane of the front wheel.

The value to be assigned to the slip angle depends on the structural and performance characteristics of the front tyre, i.e. on the relationship which the tyre is able to express between the value of the slip angle and that of the slip thrust, in combination with its camber thrust and that exerted by the rear tyre.

In particular, in order to control steering of a motorcycle in the aforementioned conditions, it is preferred to modify the structural characteristics of the tyres represented by the structure and the associated belt reinforcing elements.

A known tyre for motorcycles comprises a carcass structure formed by a pair of rubberized fabric plies reinforced with cords which are symmetrically inclined with respect to the equatorial plane of the tyre, usually known as a cross-ply carcass, and if necessary a belt structure which is also formed with pairs of rubberized fabric strips, with cords which are arranged angled both with respect to the equatorial plane of the tyre and the circumferential direction thereof.

The abovementioned tyre structure is able to generate considerable camber thrusts, but gives rise to problems relating to comfort, stability and road-holding power of the vehicle as well as fatigue on the part of the rider, caused by the excessive rigidity of these tyres.

These drawbacks have been partly overcome by a tyre which has appeared on the market more recently, comprising a radial carcass combined with a belt structure consisting of textile or metal cords: in particular the tyre for use on the rear wheel is provided with a belt structure comprising, and sometimes in an exclusive manner, a wound arrangement of cords which are preferably metallic and oriented in the circumferential direction, while the tyre for use on the front wheel retains the belt structure with radially superimposed strips of inclined cords, indicated above.

This pair of tyres has undoubtedly improved the situation from the point of view of riding comfort and stability, particularly during travel on straight roads.

The improvement in the behaviour along straight roads has, however, given rise to a new problem, consisting in the fact that the radial carcass of the tyre, in combination with a belt of cords arranged circumferentially (at 0°), during travel around bends is not always able to produce a camber thrust which is suited to requirements, also taking into account the increasingly higher performances of vehicles.

More precisely, the rear tyre provides a thrust which is quantitatively less than and qualitatively different from - i.e. is of a linear rather than a curvilinear nature - that of the front tyre and this fact makes steering of the vehicle around bends even more critical.

Other tyres for motorcycles, together with their structural characteristics, are for example described in the European Patent Applications EP 756,949 and EP 808,730 in the name of the Applicants, to which reference should be made for further more precise details.

EP 808 730 discloses a tyre according to the preamble of claims 1.

Patent Application EP 756,949 describes a tyre, in particular for use on the front wheels, which comprises a radial twin-ply carcass containing nylon cords with a count of 940/2 dtex and two radially superimposed belt strips provided with nylon cords with a count of 940/2 dtex arranged symmetrically intersecting with one another in the two strips and with respect to the equatorial plane of the tyre. The belt structure further comprises one radially external layer of steel cords, with the constructional characteristics 3x4x0.20 HE HT, where the cords are distributed with a density which continuously increases from the centre towards the ends of the belt.

European Patent Application EP 0 860 302 published after the date of the present application relates to a pneumatic tyre the carcass of which is made of cords having particular visco-elastic characteristics to provide improved running performance. Each of the carcass cords has a complex elastic modulus E* (kgf) and loss factor tan delta satisfying the following conditions:
tan delta > 0
tan delta ≤ 0.001 x E* - 0.173
tan delta ≤ -0.0003 x E* + 0.174
E ≤ 340
under a temperature of 120 degrees C.
Preferably, the cords are aramid cords whose fineness is less than 1100 dtex/2. In the examples, the density of the cords in the fabric is said to be 36 cords/5cm, i.e. 72 cords/dm.

This application is relevant for contracting states DE and GB.

Basically, according to the technical solution described in this patent application, it is possible to obtain a belt which at the same time is flexible in the centre, in order to absorb and dampen the vibrations due to the roughness of the ground, and rigid laterally, so as to generate notable slip thrusts, by providing a central portion which is mainly provided with cords at zero degrees, in combination with a low density or total absence of reinforcing elements oriented in the transverse direction, and two side portions provided both with cords at zero degrees and with reinforcements oriented in an intersecting direction with respect to the equatorial plane.

These tyres, compared to tyres which have a radial twin-ply carcass made of nylon 940/2 dtex and a single pair of belt strips with cords intersecting with one another in the two strips, have provided better results with regard to the capacity for absorption of the roughness of the road surface (contact feeling), the behaviour of the vehicle (ease of handling) and the stopping distance (braking capacity).

Patent Application EP 808,730 describes a pair of tyres for a motorcycle, i.e. a front tyre and a rear tyre.

More specifically, the front tyre comprises a radial twin-ply carcass with textile cords made of a material having a higher count than that of the tyre according to the preceding application, i.e. rayon 1220/2 dtex instead of nylon 940/2 dtex.

The belt consists of a radially external layer of metal cords, which are oriented circumferentially and have an axial variable density, and a radially internal layer consisting of a mixture reinforced with aramide paste, oriented in the circumferential direction.

In turn, the rear tyre comprises a radial twin-ply carcass comprising cords made of nylon with a count of 1400/2 dtex and a belt layer with metal cords oriented circumferentially and distributed with a constant density.

These pairs of tyres were compared with pairs of traditional tyres where the front tyres had a nylon radial twin-ply carcass and a belt structure consisting of a pair of rubberized fabric strips with aramide cords which are symmetrically inclined with respect to one another in the two strips, while the rear tyres had a nylon twin-ply carcass and belt with circumferential cords made of aramide.

The outcome of the comparison between the pair of tyres according to this latter patent application and those according to the prior state of the art also highlighted improvements, in particular as regards the capacity for absorption of the roughness of the road surface, the road-holding power and the stopping distance.

In particular, according to this solution, during travel around bends, the front tyre has a performance which is qualitatively identical to that of the rear tyre, i.e. is of the linear type: as a result, the vehicle acquires a neutral behaviour in terms of steering, which solves the problem arising with the pairs of tyres according to the known art, essentially consisting in over-steering of the vehicle, due to the inability of the rear tyre to oppose the centrifugal force in the presence of a front tyre which is able to develop a camber thrust sufficient to counterbalance the centrifugal force, with a consequent tendency of the motor vehicle to skid towards the outside of the bend.

Therefore the current state of the art indicates the direction for research into further improvements in the use of belts comprising at least one layer of metal cords arranged at a substantially zero angle with respect to the equatorial plane and distributed with an axially variable density, in combination with carcasses made of rubberized fabric comprising textile reinforcing cords with a count which is increasingly higher than that of nylon fabric having cords with a count of 940/2 dtex, and hence fabrics which are stronger, even though of increasing weight.

All of this having been stated, the current demands of motorcycle manufacturers are pushing research towards further improvements in tyres, in order to achieve a greater travelling stability of the vehicle, better grip of the tyre on the ground and in particular better handling of the vehicle, obviously without adversely affecting all the other performance characteristics during riding.

In particular, there is a growing demand for easier handling in order to improve the performance of the vehicle on mixed travel surfaces, consisting of bends in either direction alternating with straight sections, and in particular for tyres which are intended for competitive use, in a desperate attempt to reduce track lapping times in tests and competitions.

This demand may be satisfied by reducing the deformability of the tyre carcass and increasing its rigidity, so as to allow more rapid transmission of the forces between the hub of the wheel and the ground, through the carcass, but this results in a reduction in comfort along straight sections, which, as mentioned, must be avoided.

Following the teachings of the state of the art, the Applicants have thought to use the carcasses formed by fabrics with high-count cords which had produced the best results, attempting to safeguard and possibly further increase the quality of the performance of the tyre with further modifications of other structural parts.

In order to improve the handling, it was initially thought to continue using the carcasses with high-count rayon cords, using a greater height for the backfolds in the sidewalls and a filling with a rubber mixture having a greater hardness than that traditionally used; however, the greater rigidity conferred on the carcass, although producing a certain improvement with regard to the handling, gave rise to vibrations (or "shimmy") during travel with a consequent loss of stability of the vehicle, loss of comfort and shorter life of the tyre owing to irregular wear of the tread.

Research, while keeping the rayon carcass unchanged, then concentrated on finding a mixture for the tread which would have a high modulus of elasticity so as to contribute to a greater rigidity of the tyre at the same time as better grip on the ground. These attempts also did not produce satisfactory results.

During the carrying-out of the various comparative tests it was found that a tyre made at random using a carcass fabric available in the warehouse, containing textile cords with a count of 550/2 dtex, produced a significant improvement in performance in terms of the time for completing one lap of the track, compared to a tyre which hitherto was considered to offer the best performance and which had a carcass fabric provided with higher-count rayon cords, while maintaining the same levels of comfort and response.

The result obtained was entirely unexpected in that it was contrary to what the improvements of the state of the art had taught and what was logically predictable.

The subsequent analysis, in view of the positive nature of the result, involved detailed identification of the structural parts of the fabric and their characteristics.

The fabric achieving this improvement was identified as being a type already described in the pending patent application 97EP-830499.6 in the name of the same Applicants relating to motor vehicle tyres provided with a carcass having low-count cords, specifically made of PEN. Said application has been published after the date of the present application.

The fabric was aimed at reducing the weight of motor vehicle tyres.

The fact that this fabric with low-count cords had not been identified initially as a possible improving factor in a motorcycle tyre can be explained by the different behaviour, around bends, of the two types of tyre (for cars and for motorcycles, respectively), the aforementioned fabric not having demonstrated any particularly interesting characteristics in car tyres, apart from its said lightness.

In fact, a motor vehicle tyre around bends remains substantially in contact with the ground along its entire axial extension and its performance characteristics depend mainly on the characteristics of the belt structure, as demonstrated by the "bean-shaped" deformation of the impression area of the tyre, which is entirely absent in the case of motorcycle tyres.

In a different manner, the motorcycle follows a curvilinear trajectory, inclining the equatorial plane of the tyres at angle values which are fairly high with respect to the vertical line to the ground: the impression area of the tyre is not deformed in a "bean-like" manner, but is displaced axially from the equatorial plane towards the end of the tread and vice versa when entering a bend and leaving a bend.

This displacement of the impression area in combination with the inclination of the rolling plane of the tyre requires an accentuated curvature of the tread in order to prevent, when travelling around a bend, the sidewall of the tyre from coming into contact with the road.

For this reason a motorcycle tyre has a transverse curvature which is much greater than that of a motor vehicle tyre; in the case of the former the transverse curvature coefficient is usually greater than 0.15, whereas in the second case it is less than 0.05.

It is known moreover that, in order to obtain good stability and good manoeuvrability of the vehicle, the front tyre must have a smaller cross-sectional width, and hence a greater transverse curvature of the tread, preferably greater than the transverse curvature of the corresponding rear tyre and, even more preferably, not less than 0.30.

The different disposition of the two types of vehicles has a considerably different effect on the behaviour of the respective tyres and their structure, in particular along curvilinear trajectories, and results in deformations of the carcass which are not comparable with one another.

The marked behavioural difference between motor vehicle tyres and motorcycle tyres may be better understood by considering that, in brief, the former operate with a slip angle of about 30° and a camber angle of 2° or 3°, and the latter with a slip angle of 2° or 3° and a camber angle on average of 45°, with values increasing up to 65° and more.

Therefore it was not foreseeable that a carcass fabric with low-count cords could produce improvements in motorcycle tyres.

By way of conclusion, the improvements which have emerged from the comparative tests are due to the entirely random use of a fabric with low-count cords, available in the warehouse for tests on motor vehicle tyres, and not a systematic selection of fabrics expressly intended to identify the best fabric for solving the problem.

According to a first aspect thereof, therefore, the invention relates to a tyre for two-wheeled vehicles according to claim 1.

Preferably the rubberized fabric ply of the carcass comprises textile cords made of PEN.

Preferably the density of the textile cords in the carcass fabric is between 125 cords/dm and 280 cords/dm.

Advantageously the count of the textile cords incorporated in the carcass fabric is 550/2 dtex.

Even more preferably, the carcass of the tyre comprises a pair of rubberized fabric plies with cords arranged parallel with one another in each ply and intersecting with those of the adjacent ply; the cords have a direction which is inclined relative to the equatorial plane of the tyre and the angle of inclination of the cords with respect to the equatorial plane of the tyre, measured on the peripheral crown at said plane, is between 70° and 90°.

According to a second aspect thereof, the invention relates to a motorcycle fitted with a pair of tyres, respectively a front tyre and a rear tyre, according to claim 12 of the set of claims for contracting states DE and GB, or respectively according to claim 13 of the set of claims for other contracting states.

The present invention, however, will be better understood with the aid of the description which follows and the accompanying figures, which are intended solely by way of a non-limiting illustration, in which:
Figure 1 shows a cross-section through the profile of a tyre for vehicle wheels according to the invention;
Figure 2 shows a sectional view along the equatorial plane of the tyre according to Figure 1, in the peripheral crown zone, of the structure of a carcass ply;
Figure 3 shows, on the same scale, in solid lines, the carcass ply according to Figure 2 and, superimposed in broken lines, a known carcass ply made of rayon;
Figure 4 shows a schematic and simplified plan view of a belt structure associated with the carcass according to the invention, in the absence of said carcass, in an advantageous embodiment;
Figure 5 shows a qualitative diagram of the slip thrust pattern for a tyre according to the invention and for a tyre of the known type;
Figure 6 shows a partial side view of the front part of a motorcycle provided with a wheel according to the invention;
Figure 7 shows, on the same scale and in cross-section, the structure of a twin-ply carcass according to the invention, on the left, compared with that of the known art, on the right.

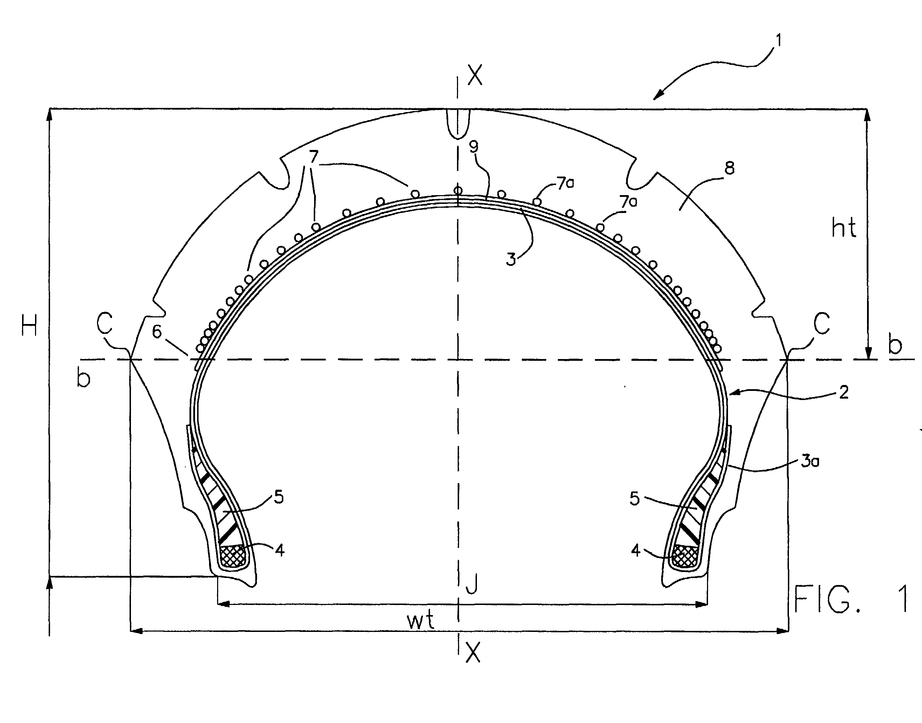

With reference to Figure 1, 1 denotes in its entirety a tyre with a high transverse curvature coefficient, in particular for use on the front wheels of motorcycles, according to the present invention.

This transverse curvature coefficient is defined by the particular value of the ratio between the distance ht of the top of the tread from the line b-b passing through the ends C of the tread, measured on the equatorial plane X-X, and the distance wt between said ends of the tread; the transverse curvature coefficient in tyres for two-wheeled vehicles has a very high value, normally not less than 0.15.

Preferably the transverse curvature coefficient of the front tyre is greater than that of the corresponding rear tyre and is preferably greater than 0.30.

Even more particularly, the tyres of the invention may have a cross-sectional ratio (H/wt) ≤ 80% and/or may be mounted on a mounting rim with a width J ≥ 60% of the nominal chord of the tyre, equal to wt for the tyre shown.

The tyre 1 comprises a carcass 2 which is toroidally shaped and the structure of which comprises at least one carcass ply 3 consisting of rubberized fabric forming a fundamental part of the invention, as described further below.

The opposite side edges 3a of the carcass ply are folded back around corresponding bead cores 4. An elastomeric filling substance 5 is applied onto the external perimetral edge of the bead wires 4 and occupies the space defined between the carcass ply 3 and the corresponding folded-back side edge 3a of the carcass ply.

The tyre zone comprising the bead core 4 and the filling substance 5 form the bead which is intended to secure the tyre onto a corresponding mounting rim, not shown.

The aforementioned carcass has, associated with it, a belt structure 6 comprising a radially external layer essentially consisting of one or more cords 7 which are arranged parallel with one another and consecutively next to each other, from one end to the other, on the peripheral crown portion of the carcass, so as to form a plurality of circumferential turns 7a substantially arranged in the circumferential rolling direction of the tyre, with an orientation usually said to be "at zero degrees" with reference to its position relative to the equatorial plane X-X of the tyre. This external layer preferably consists of a single cord or of a thin strip of rubberized fabric comprising up to five adjacent cords, spirally wound from one end to the other on said peripheral crown portion of the carcass.

Preferably this cord is the well-known metal cord of the high-elongation (HE) type, the use of which and the characteristics of which have already been described in detail, for example, in the European Patent EP 0,461,646 in the name of the Applicants themselves, to which reference should be made for further details. Generally the cord consists of steel wires with a diameter equal to or greater than 0.10 mm, preferably of between 0.12 and 0.35 mm.

Preferably these cords are made from steel wires with a high carbon content (HT), i.e. containing a quantity of carbon equal to or greater than 0.9%. In particular, in a specific prototype prepared by the Applicants, the helical winding of the layer 7 consists of a single cord 7, known as 3x4x0.20 HE HT, spirally wound from one end to another of the belt. These cords have an ultimate elongation usually of between 4% and 8%.

Even more preferably, the density of distribution of the turns of the cord 7, particularly in the tyre for use on the front wheel, varies progressively, from the equatorial plane towards the ends, preferably in accordance with a predetermined relationship described in the patent application EP 0,756,949 in the name of the Applicants, to which reference should be made for further details. It is stated briefly here that the density of the cords at 0° in the zone located astride the equatorial plane, where there is the greatest dispersion, is preferably not greater than 8 and more preferably between 3 and 6 cords/cm.

The width of said zone is preferably between 10% and 30% of the axial extension of the belt.

Preferably the quantity of cords in said central zone has a value of between 60% and 80% of the quantity of cords in the vicinity of the shoulders of the tyre, where the density of said cords is preferably not greater than 10 and more preferably between 6 and 8 cords/cm.

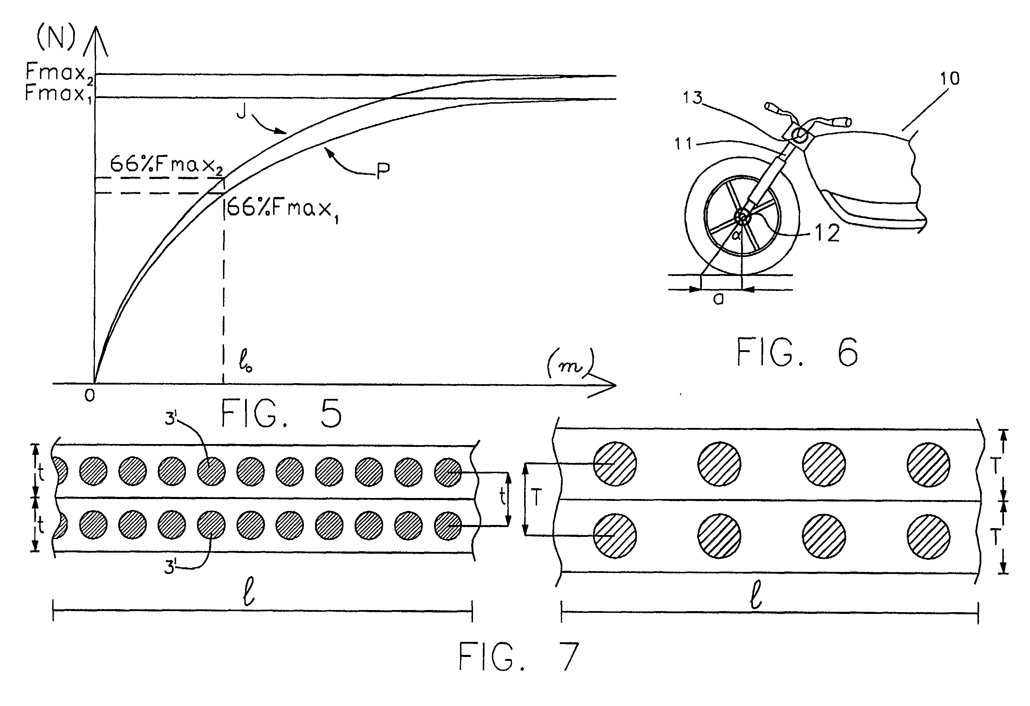

Preferably, the belt structure also comprises a radially internal reinforcing layer 9 (Figure 4) which can be made in different mutually alternative forms.

The layer 9 may comprise two radially superimposed strips 9a and 9b of rubberized fabric consisting of reinforcing elements 9c incorporated in an elastomer matrix; these elements, which are parallel with one another in each strip, are oriented in two directions intersecting one another in the two strips and preferably symmetrically inclined with respect to the equatorial plane X-X. The reinforcing elements are preferably cords, which may consist of textile or also metal, and the angles v and w formed by said cords with respect to the equatorial plane, if necessary, different from one another, are between 18° and 50° and preferably between 22° and 45°. The two strips may be interrupted in the region of the equatorial plane, resulting in a zone of width "a" which is preferably between 10% and 30% of the axial extension of said belt and in which only the circumferentially directed reinforcing cords 7 are present.

The variant which is now described has the advantage that there is the possibility of choosing, in the aforementioned strips, density values suitable for the lateral portions of the belt structure, without correspondingly increasing the density in the central peripheral crown portion of the belt structure.

In particular, with nylon cords having a count of 940/2 dtex, density values of between 4 and 8 cords/cm have proved to be advantageous, in combination with angles of orientation relative to the circumferential direction of between 30° and 50°.

According to an alternative embodiment, (Figure 1), the radially internal layer 9, on the other hand, consists essentially of a sheet of elastomer material arranged between the layer of cords 7 and the carcass ply 3 and comprising a homogeneously dispersed reinforcing filler suitable for increasing the mechanical strength and stretching characteristics of the elastomer material, particularly in the unprocessed state.

The sheet 9 may also be axially continuous or interrupted in the region of the surface X-X, as for the pair of strips already described, and may be used in combination with or as an alternative to said pair of strips.

In particular, the aforementioned sheet of elastomer material 9 consists of a mixture (preferably a mixture based on natural rubber containing quantities of carbon black of between 30 and 70 phr) to which a suitable fibrous filler has been added. In this connection, so-called aramide paste (short fibrillated fibres of poly-para-phenylene terephthalamide), of the type known commercially as "Kevlar pulp" or "Twaron pulp" (Kevlar and Twaron are registered trademarks of Du Pont and Akzo, respectively), is preferred.

The elastomer material reinforced with said aramide paste has, in the unprocessed state, a tensile breaking load of between 3 and 7 MPa with an elongation of 50% at a tensile load of between 0.6 and 3 MPa. The aramide paste is introduced into the unprocessed mixture in quantities of between 1 and 10 phr (parts by weight per 100 hundred parts of rubber) using fibres with a length of between 0.1 and 2.5 mm.

In this case the layer 9 has a thickness which does not exceed 1 mm and is preferably between 0.075 and 0.8 mm, or even more preferably between 0.15 and 0.5 mm, and is advantageously of the order of 0.25 mm.

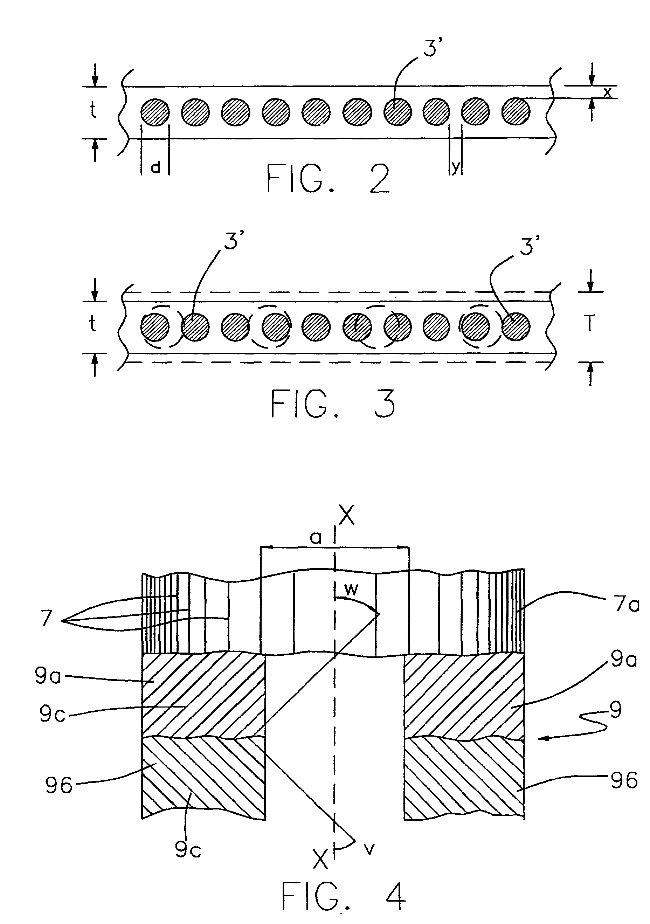

The carcass 2 comprises at least one carcass ply 3 formed from a rubberized fabric consisting of a sheet of elastomer material incorporating reinforcing cords 3' (Fig. 2): in accordance with the invention, these cords are preferably textile cords made from materials such as aramide, polyethylene terephthalate, commercially known as PET, polyvinyl alcohol, commercially known as PVA and, even more preferably, polyethylene naphthalene-2,6-dicarboxylate, commercially known as PEN.

These cords have a count preferably of between 420/2 dtex and 840/2 dtex and are distributed in the fabric with a density of between 125 cords/dm and 280 cords/dm.

Even more preferably, the modulus of elasticity of the fabric, which is calculated by multiplying the value of the modulus of the individual cord (measured between 20 N and 45 N) by the density of the cords, is 100,000 MPa/cm and 200,000 MPa/cm, while the breaking load of the fabric varies preferably between 900 N/cm and 2000 N/cm.

Figure 2 illustrates the corresponding geometrical dimensions of the fabric, viewed in partial cross-section, i.e. the parameters "d" (diameter of the cord), "t" (total thickness of the fabric), "x" (thickness of the rubber sheet which lines the layer of said cords on both the surfaces) and "y", i.e. the distance between adjacent cords.

In accordance with the invention, the total thickness t of the fabric incorporating the cords is preferably between 0.6 mm and 0.8 mm, while the distance y between adjacent cords is preferably between 0.05 and 0.50 mm.

Table 1 summarizes the data which define the fabric of the carcass ply in accordance with two examples of embodiment, of different density, indicated respectively by 1 and 2.

**TABLE 1**

| Fabric | | Example 1 | Example 2 |
|---|---|---|---|
| Cord count | [dtex] | 550/2 | 550/2 |
| Total count (2 strands of twisted threads) | [dtex] | 1100 | 1100 |
| Twists per strand | [turns/dm] | 48 | 48 |
| Cord density | [cords/dm] | 200 | 180 |
| Fabric thickness "t" | [mm] | 0.67 | 0.67 |
| Cord diameter "d" | [mm] | 0.35 | 0.35 |
| Lining thickness "x" | [mm] | 0.16 | 0.16 |
| Distance "y" between adjacent cords | [mm] | 0.15 | 0.20 |
| Modulus of elasticity of fabric | [MPa/cm] | 170,000 | 153,000 |
| Fabric breaking load | [N/cm] | 1600 | 1440 |

Table 2 below, instead, compares the dimensions and the characteristics relating to a carcass fabric made in accordance with the state of the art, namely rayon cords, having a count of 1220/2 dtex, with those of the two fabrics according to the invention described in the above Examples 1 and 2.

The table also shows the percentage variations (Δ%) in the value of the parameters of the fabrics according to the invention compared to those of the known fabric. In all these fabrics the thickness "x" is equal to 0.16 mm.

**TABLE 2**

| Rubberized fabric | | Known | Ex. 1 | Ex. 2 |
|---|---|---|---|---|
| Cord material | | rayon | PEN | PEN |
| Count | [dtex] | 1220/2 | 550/2 | 550/2 |
| Density | [cords/dm] | 80 | 200 | 180 |
| Thickness "t" | [mm] | 0.9 | 0.67 | 0.67 |
| | Δ% | | -25% | -25% |
| Cord diameter "d" | [mm] | 0.55 | 0.35 | 0.35 |
| | Δ% | | -36.3% | -36.3% |
| Distance "y" | [mm] | 0.7 | 0.16 | 0.16 |
| | Δ% | | -73% | -73% |
| Modulus of elasticity of the fabric | [Mpa/cm] | 112,000 | 170,000 | 153,000 |
| | Δ% | | +52% | +36% |
| Breaking load of fabric | [N/cm] | 792 | 1600 | 1440 |
| | Δ% | | +102% | +82% |

Figure 3 compares, in a cross-section through the fabric, on the same scale, the thickness t of the fabric according to Example 1 of the invention with that T of the known fabric. A preferred embodiment of the invention relates to a prototype tyre for motorcycles, provided with a radial carcass, namely of the type comprising the elements for reinforcing the carcass ply which are oriented at angles of inclination with respect to the equatorial plane having a value of not less than 70°, but usually arranged along meridian planes of the tyre (or in any case forming with said surface an angle very close to 90°).

This tyre comprises a twin-ply carcass, i.e. formed by a pair of plies of rubberized fabric; and this pair of plies, in the prototype described herein, is obtained from the same rubberized fabric, as illustrated in Figure 7, in particular the fabric according to Example 1.

The cords are arranged parallel with one another in each ply and intersecting with those of the adjacent ply at an angle of inclination of 76°, measured on the peripheral crown, relative to and at the equatorial plane (X-X) of the tyre.

In order to evaluate the qualitative results achieved with the prototype tyre according to the invention, a pair of these tyres was tested on track, a comparison being made with an equivalent pair of tyres, i.e. sold for the same type of vehicle and operation, produced by the Applicants themselves and representing the best option present on the market.

The tyre used in the comparison had a twin-ply carcass made of nylon, with a count of 1220/2 dtex, density of 80 cords/dm, made with the fabric described in Table 2, with the cords oriented at the same angle of 76° as the tyre according to the invention.

The belts, which were the same in both the tyres tested, corresponded to those described above, comprising an external layer of steel cords, 3x4x0.20 HE HT, oriented circumferentially, and a radially internal layer consisting of a sheet of elastomer of 0.3 mm thickness reinforced with the so-called aramide paste: in the front tyre the aforementioned cords were distributed with a density varying from 4 to 8 cords/cm, progressively from the equatorial plane to the ends of the belt.

The rear tyre of the motorcycle was identical to the front tyre, except for the fact that the circumferential cords were distributed with a constant density equal to 65 cords/dm.

The characteristics of the vehicle used were as follows:

| MOTORCYCLE | DUCATI 748 SS 98 |
|---|---|
| Front tyre: | |
| Size | 120/70 ZR 17 |
| Inflating pressure | 2.5 bar |
| Rim | 3.50 -17 |

| Rear tyre: | |
|---|---|
| Size | 180/55 ZR 17 |
| Inflating pressure | 1.9 bar |
| Rim | 5.5-17 |

The track test consisted in evaluating the lap times of the motorcycle indicated, ridden on successive occasions by the same rider, the motorcycle having been fitted first with the pair of standard production tyres and then the pair of tyres according to the invention.

The track, which was of the so-called slalom type, consisted of a succession of alternating bends and straight sections along a predetermined trajectory.

The result of the test revealed a considerable reduction in the track lap time for the tyres according to the invention.

In fact it emerged that the motorcycle fitted with the pair of tyres according to the invention reduces the travel time by 1.3 seconds per lap compared to when the same motorcycle is fitted with the pair of comparison tyres; more specifically, it emerged that the motorcycle fitted with the tyres according to the invention performs a lap of the track in a time of 1'40"20 (one minute, 40 seconds and 20 hundredths of a second) compared to the time of 1'41"50 obtained with the comparison tyres.

The following Table 3 shows the results of a comparison, relating to other performance data, between the tyre according to the invention indicated by A and the known tyre indicated by B.

The ratings indicated in Table 3 are subjective, being based on an evaluation by the rider. The ratings are expressed as a number on a scale from 1 to 10, the highest rating being attributed to the tyre which demonstrated the best performance in relation to each characteristic considered.

It can also be noted how the tyre according to the invention has a level of performance substantially equal to or even better than that of the comparison tyre, but with a substantial improvement as regards the riding performance, i.e. the sought-after better handling of the vehicle.

**TABLE 3**

| TESTS/TYRES | A | B |
|---|---|---|
| RIDING PERFORMANCE | 10 | 7 |
| SHOCK-ABSORBING CAPACITY | 10 | 10 |
| DIRECTIONAL STABILITY | 10 | 10 |
| BRAKING PERFORMANCE | 10 | 9 |
| COMFORT | 10 | 10 |
| CONTACT FEELING | 10 | 8 |

The last heading "Contact feeling" refers to the sensation of reliability of response of the vehicle to steering manoeuvres performed by the rider, as a result of adherence of the tyre.

In order to obtain a confirmation as to the above results, a further test, complementing the road test, i.e. a so-called in-door test conducted in a laboratory, was performed, during which a wheel fitted with a front tyre was placed in contact against a rotating drum, a so-called road drum, with a diameter considerably greater than that of the tyre and lined with a layer possessing given abrasive characteristics able to represent overall the road surface.

The two tyres compared were identical to those used for the track test.

The drum is made to rotate about its axis and the rolling plane of the tyre is progressively inclined, at a predetermined slip angle "θ", with a camber angle equal to zero, i.e. keeping the abovementioned rolling plane always perpendicular to the drum surface.

The wheel, by means of its hub, is associated with special sensing instruments intended to measure the force transmitted by the road wheel to the hub via the tyre carcass.

The equipment, which is known to experts as "slip thrust sensor", is used to assess the cornering effect of the tyre.

It must be pointed out that the maximum slip thrust generated by the tyre following setting of a slip angle is not transmitted instantaneously to the hub of the wheel, but progressively increases from zero to its value Fₘₐₓ within a time interval during which the wheel travels a certain distance.

Once the slip thrust curve has been traced in a Cartesian diagram which shows along the ordinate axis the value of this thrust and along the abscissa axis the distance travelled by the wheel, the term "relaxation length" of the tyre is used to define the distance "*lo*" travelled by the wheel, while the slip thrust increases up to 66% of its value Fₘₐₓ.

The value of the relaxation length "*lo*" is a parameter which depends on the deformability, and in particular on the rigidity of the carcass; in practice, the more rigid the carcass is, the smaller is the relaxation length.

It has been found, however, that "*lo*" is substantially independent of the speed of the wheel.

Figure 5 shows the two curves I and P traced by the test equipment for the tyre according to the invention and for the comparison tyre, respectively.

The abscissa and ordinate values, shown on the respective scales, are expressed respectively in metres and Newtons per degree (N/°).

The test was performed assigning to the tyres a slip angle "θ" equal to 3°.

As can be seen from the graph according to Figure 5, both the curves of the tyres reach the value of the maximum slip thrust "Fₘₐₓ" with values increasing initially almost linearly, then along a joining arc and then in an asymptotic manner towards the line parallel to the axis of the abscissae, identifying the abovementioned maximum value.

The curve I relating to the tyre according to the invention provides a very surprising indication in view of the greater flexibility of the carcass fabric which is very much thinner than that of the comparison tyre owing to the smaller diameter of the reinforcing cords and the consequent smaller rubberization thickness; basically this curve indicates not only that the value of the slip thrust is greater than that of the reference tyre, Fₘₐₓ₂ > Fₘₐₓ₁, but also that the increase of this value from zero to a significant value, 66% of its maximum value, is produced substantially at the same time, as demonstrated by the parity of the value of the relaxation length *lo*, in this case equal to 0.218 m at 100 Km/hour.

In other words, the tyre according to the invention reaches, at the same time as the comparison tyre, an absolute slip thrust value which is substantially greater.

The value of the slip thrust Fₘₐₓ₂ is about 8% greater than the value Fₘₐₓ₁ with an obvious advantage over the comparison tyres in slalom type travel paths.

By way of conclusion it is pointed out that the carcass according to the invention is more rigid than that of the comparison tyre, thus facilitating steering of the motorcycle around bends, in particular at high speeds, and that this result is achieved without adversely affecting the comfort and the braking capacity during travel along straight sections, as testified by the opinion of the riders and commented below, such that the invention achieves the object of increasing the handling capability of the vehicle, while leaving unchanged the performance characteristics.

The invention has many unexpected advantages, as will be explained hereinbelow.

It must be stated that the tyre according to the invention results in a significantly improved handling action compared to the comparison tyre which in turn is already better than the known tyres.

The resultant improvement has been obtained by replacing in the radial carcass the fabrics containing high-count textile cords (≥ 940/2 dtex) with new lower-count fabrics (≤ 840/2 dtex), in particular fabrics containing PEN cords with a count of 550/2 dtex. It is surprisingly noted that the tyre according to the invention has improved not only the manoeuvrability, but also, among other things, the contact feeling.

It seems obvious that the improvements achieved in terms of a reduction in the lap times compared to traditional tyres depend exclusively on a carcass structure which is capable of reacting with greater immediacy to the continuous variation in the bends along the road, and which therefore is provided with more rigid sides.

Moreover, the greater flexibility of the carcass due to the use of thinner fabrics increases the impression area during braking, favouring an improved braking capacity.

The improvements brought about by the tyres according to the invention are moreover confirmed by the evaluation of the riders with regard to the lesser degree of fatigue required in order to perform fast changes in the trajectory when riding motorcycles fitted with these tyres.

The advantages obtained with the improved manoeuvrability, in combination with an unchanged performance of the motorcycle, facilitate handling since the rapid response of the tyre to the manoeuvres performed, and to the consequent forces transmitted around bends from the vehicle to the road and vice versa, reduces the need for continuous corrections with steering movements of the handlebars.

Surprisingly it was also noted that the front tyre according to the invention, although having a greater rigidity indicated by the greater slip thrust compared to the comparison tyre (Fₘₐₓ₂ > Fₘₐₓ₁), does not result in the presence of or in an increase in the shimmy effect, namely that troublesome series of oscillations, with a high frequency (8-10 Hz) at low speeds and low frequency at high speeds, which are transmitted from the handlebars to the rider's arms during travel along straight road sections.

Moreover, the greater slip thrust exerted compared to known tyres results in the further advantage of being able to fit the tyres according to the invention to motorcycles of above average power since it is possible to offset adequately the effects of the higher centrifugal forces generated by the greater weight and/or by the greater speed of the vehicle.

It is emphasized moreover how the tyre according to the invention provides the motorcycle manufacturer with considerable help in finding solutions which are able to ensure at the same time manoeuvrability and stability at high speeds.

In order to understand the point better, the meaning of the terms "fork" and "foretravel" in connection with a motorcycle is briefly explained here.

As illustrated schematically in Figure 6 showing a motorcycle 10, the fork 11 corresponds to the part of the vehicle on which the front wheel is mounted.

The fork comprises a tube 11 which is freely rotatable with respect to the frame and the top end of which is associated with the handlebars 13, while the bottom end is associated with a U-shaped element connected to the hub 12 of the front wheel.

The axis of the fork is inclined at an angle α with respect to an axis perpendicular to the ground and passing through the hub of the wheel.

The foretravel is the distance "a" measured on the ground between the two points of intersection, respectively, of the axis of the fork and the abovementioned vertical axis with the ground.

The above having been stated, generally the motorcycle manufacturers are able to improve the stability of the vehicle by increasing the foretravel, i.e. the angle of inclination of the fork, but in doing so worsen the manoeuvrability of the vehicle, and so they are obliged to find a compromise solution which very often is not entirely satisfactory.

The tyre according to the invention favours the constructional design of the motorcycle since the increased manoeuvrability allows the foretravel, and hence the stability of the vehicle, to be increased, while retaining the same manoeuvrability of vehicles with a smaller foretravel.

The Applicants consider that they are able to formulate hereinbelow a theory in an attempt to find a logical explanation for the favourable results obtained with the present solution, without this obviously constituting a constraint or a limitation on the invention should this theory not be confirmed for any reason.

In order to support this theory, reference will be made, below, to the illustration shown in Figure 7, in which the twin-ply structure of the carcass according to the invention is shown on the left-hand side and that of the carcass of known tyres is shown on the right-hand side. The geometrical dimensions of the rubberized fabrics of the carcass according to the invention and of that of the known tyres are indicated respectively under Example 1 in Table 1 and Table 2.

As shown in Figure 7, the total thickness of the two plies, and consequently the distance (t and T) between the axes of the cords in the two fabrics combined with each other assumes a significantly smaller value in the carcass according to the invention.

Consequently the composition forming the twin-ply carcass according to the invention, formed by the combination of two very thin fabrics, so that the two layers of reinforcing cords are very close to one another, offers a greater compactness and better structural homogeneity and therefore a more isotropic performance; this fact, in combination with the high modulus of elasticity which can be achieved with an increase in the density of the cords in the fabric, as shown in Figure 7 and indicated in Table 1, allows at the same time the rigidity and the flexibility of the carcass to be increased.

Basically the carcass realized in accordance with the invention has managed to combine the two characteristics - usually opposing - of rigidity and flexibility, resulting in better handling without adversely affecting the road-holding power and the comfort.

A further favourable result of the invention, derived from the greater rigidity of the carcass, consists in the possibility of using for the tread rubber mixtures with a modulus of elasticity which is not excessively high, i.e. "soft" mixtures which offer greater road-holding power.

The tyre according to the state of the art requires, in fact, a mixture for the tread with a fairly high modulus of elasticity in order to contribute to the overall rigidity of the tyre, the sole contribution of the structural rigidity, i.e. of the camber angle, as seen, not being sufficient for the road-holding power around bends.

The present invention, instead, allows one to use advantageously, when preferred and with all the other conditions being equal, mixtures for treads with hardness factors of between 50° and 60° Shore A instead of the usual mixtures having a greater hardness, of the order of 65° Shore A or more.

By way of conclusion, in accordance with the invention, it has been found that, by increasing the density of the cords in combination with a reduction in their count, it is possible to obtain motorcycle tyres with a performance which can be controlled more easily and which allow better handling of the vehicle fitted with said tyres.

The person skilled in the art, once he/she has understood the invention as described above, will be able to carry out also all those choices, variations and modifications of the variables associated with the invention, necessary for solving the specific technical problem faced by him/her, in connection, for example, with the type of motorcycle which is to be fitted with said tyres.

## Claims (Claims for the following Contracting State(s): AT, BE, CH, DK, ES, FR, GR, IE, IT, LI, LU, NL, PT)

1. Tyre (1) for two-wheeled vehicles, having a transverse curvature coefficient with a value of not less than 0.15, comprising a torus-shaped carcass (2) with a central peripheral crown and two sidewalls terminating in a pair of beads (4) for securing said tyre (1) to a corresponding mounting rim, a tread (8) extending coaxially around said peripheral crown and a belt structure (6) arranged between said carcass (2) and said tread (8), said carcass (2) comprising at least one rubberized fabric ply (3) provided with reinforcing cords (3'), **characterized in that** said reinforcing cords (3') are textile cords with a count of between 420/2 and 840/2 dtex and **in that** said rubberized fabric (3) incorporating the cords (3') has a modulus of elasticity of between 100,000 MPa/cm and 200,000 MPa/cm.

2. Tyre (1) according to Claim 1, **characterized in that** said textile cords (3') are made from a material chosen from the group comprising aramide, polyethylene terephthalate (PET), polyvinyl alcohol (PVA) and polyethylene naphthalene-2,6-dicarboxylate (PEN).

3. Tyre (1) according to Claim 1, **characterized in that** said textile cords (3') are made of polyethylene naphthalene 2,6 dicarboxylate (PEN).

4. Tyre (1) according to Claim 1 or 2, **characterized in that** the density of said textile cords (3') in said fabric (3) is between 125 cords/dm and 280 cords/dm.

5. Tyre (1) according to Claim 1, **characterized in that** the count of said cords (3') is 550/2 dtex.

6. Tyre (1) according to Claim 1, **characterized in that** said carcass (2) comprises a pair of said rubberized fabric plies (3), said cords (3') being arranged parallel with one another in each ply (3) and intersecting with those of the adjacent ply, being oriented in directions symmetrically inclined relative to the equatorial plane (X-X) of the tyre (1).

7. Tyre (1) according to Claim 6, **characterized in that** the angle of inclination of said cords (3') with respect to the equatorial plane of the tyre (1), measured on the peripheral crown at said plane is between 70° and 90°.

8. Tyre (1) according to Claim 1, **characterized in that** it comprises a belt (6) formed by a radially external layer provided with a plurality of turns (7a) of cords (7) arranged at a zero angle with respect to the equatorial plane of the tyre (1), and by a radially internal layer (9) comprising a pair of radially superimposed strips (9a,9b) of rubberized fabric provided with reinforcing elements (9c) incorporated in an elastomer matrix, parallel with one another in each strip, intersecting with one another in adjacent strips and inclined with respect to the equatorial plane of the tyre (1) at angles of between 18° and 50°.

9. Tyre (1) according to Claim 8, **characterized in that** said strips (9a,9b) are interrupted at the equatorial plane in a zone having a width preferably of between 10% and 30% of the axial extension of said belt (6).

10. Tyre (1) according to Claim 1, **characterized in that** it comprises a belt (6) formed by a radially external layer provided with a plurality of turns (7a) of cords (7) arranged at a zero angle with respect to the equatorial plane of the tyre (1) and a radially internal layer (9) formed by a sheet of elastomer material comprising binding means dispersed in the elastomer material of said sheet.

11. Tyre (1) according to Claim 10, **characterized in that** said sheet of elastomer material has a thickness of between 0.075 and 0.5 mm and **in that** said binding means consist of aramide paste.

12. Tyre (1) according to Claim 1, **characterized in that** said tread (8) consists of a mixture with a hardness factor of between 50° and 60° Shore A.

13. Motorcycle fitted with a pair of tyres, respectively a front tyre and a rear tyre, having a transverse curvature coefficient with a value of not less than 0.15, each tyre comprising a torus-shaped carcass (2) with a central peripheral crown and two sidewalls terminating in a pair of beads (4) for securing said tyre (1) to a corresponding mounting rim, a tread (8) extending coaxially around said peripheral crown and a belt structure (6) arranged between said carcass (2) and said tread (8), said carcass (2) comprising at least one rubberized fabric ply (3) provided with reinforcing cords (3'), **characterized in that** at least the carcass (2) of said front tyre comprises a rubberized fabric (3) incorporating textile cords (3') with a count of between 420/2 and 840/2 dtex and having a modulus of elasticity of between 100,000 MPa/cm and 200,000 MPa/cm.

14. Motorcycle according to Claim 13, **characterized in that** at least the carcass (2) of said front tyre comprises a pair of said rubberized fabric plies (3).

15. Motorcycle according to Claim 13, **characterized in that** it comprises said front tyre provided with a belt structure (6) comprising a layer of metal circumferential cords (7) distributed with a progressively increasing density from the equatorial plane towards the belt ends and a rear tyre provided with a belt structure (6) comprising a layer of metal circumferential cords (7) distributed with a constant density.

## Claims (Claims for the following Contracting State(s): DE, GB)

1. Tyre (1) for two-wheeled vehicles, having a transverse curvature coefficient with a value of not less than 0.15, comprising a torus-shaped carcass (2) with a central peripheral crown and two sidewalls terminating in a pair of beads (4) for securing said tyre (1) to a corresponding mounting rim, a tread (8) extending coaxially around said peripheral crown and a belt structure (6) arranged between said carcass (2) and said tread (8), said carcass (2) comprising at least one rubberized fabric ply (3) provided with reinforcing cords (3'), **characterized in that** said reinforcing cords (3') are textile cords with a count of between 420/2 and 840/2 dtex, **in that** said rubberized fabric (3) incorporating the cords (3') has a modulus of elasticity of between 100,000 MPa/cm and 200,000 MPa/cm, and **in that** said textile cords (3') in said fabric (3) have a density of between 125 cords/dm and 280 cords/dm.

2. Tyre (1) according to Claim 1, **characterized in that** said textile cords (3') are made from a material chosen from the group comprising aramide, polyethylene terephthalate (PET), polyvinyl alcohol (PVA) and polyethylene naphthalene-2,6-dicarboxylate (PEN).

3. Tyre (1) according to Claim 1, **characterized in that** said textile cords (3') are made of polyethylene naphthalene 2,6 dicarboxylate (PEN).

4. Tyre (1) according to Claim 1, **characterized in that** the count of said cords (3') is 550/2 dtex.

5. Tyre (1) according to Claim 1, **characterized in that** said carcass (2) comprises a pair of said rubberized fabric plies (3), said cords (3') being arranged parallel with one another in each ply (3) and intersecting with those of the adjacent ply, being oriented in directions symmetrically inclined relative to the equatorial plane (X-X) of the tyre (1).

6. Tyre (1) according to Claim 5, **characterized in that** the angle of inclination of said cords (3') with respect to the equatorial plane of the tyre (1), measured on the peripheral crown at said plane is between 70° and 90°.

7. Tyre (1) according to Claim 1, **characterized in that** it comprises a belt (6) formed by a radially external layer provided with a plurality of turns (7a) of cords (7) arranged at a zero angle with respect to the equatorial plane of the tyre (1), and by a radially internal layer (9) comprising a pair of radially superimposed strips (9a,9b) of rubberized fabric provided with reinforcing elements (9c) incorporated in an elastomer matrix, parallel with one another in each strip (9a,9b), intersecting with one another in adjacent strips and inclined with respect to the equatorial plane of the tyre (1) at angles of between 18° and 50°.

8. Tyre (1) according to Claim 7, **characterized in that** said strips (9a,9b) are interrupted at the equatorial plane in a zone having a width preferably of between 10% and 30% of the axial extension of said belt (6).

9. Tyre (1) according to Claim 1, **characterized in that** it comprises a belt (6) formed by a radially external layer provided with a plurality of turns (7a) of cords (7) arranged at a zero angle with respect to the equatorial plane of the tyre (1) and a radially internal layer (9) formed by a sheet of elastomer material comprising binding means dispersed in the elastomer material of said sheet.

10. Tyre (1) according to Claim 9, **characterized in that** said sheet of elastomer material has a thickness of between 0.075 and 0.5 mm and **in that** said binding means consist of aramide paste.

11. Tyre (1) according to Claim 1, **characterized in that** said tread (8) consists of a mixture with a hardness factor of between 50° and 60° Shore A.

12. Motorcycle fitted with a pair of tyres, respectively a front tyre and a rear tyre, having a transverse curvature coefficient with a value of not less than 0.15, each tyre (1) comprising a torus-shaped carcass (2) with a central peripheral crown and two sidewalls terminating in a pair of beads (4) for securing said tyre to a corresponding mounting rim, a tread (8) extending coaxially around said peripheral crown and a belt structure (6) arranged between said carcass (2) and said tread (8), said carcass (2) comprising at least one rubberized fabric ply (3) provided with reinforcing cords (3'), **characterized in that** at least the carcass (2) of said front tyre comprises a rubberized fabric (3) incorporating textile cords (3') with a count of between 420/2 and 840/2 dtex, having a modulus of elasticity of between 100,000 MPa/cm and 200,000 MPa/cm, and **in that** said textile cords (3') in said fabric (3) have a density of between 125 cords/dm and 280 cords/dm.

13. Motorcycle according to Claim 12, **characterized in that** at least the carcass (2) of said front tyre comprises a pair of said rubberized fabric plies (3).

14. Motorcycle according to Claim 12, **characterized in that** it comprises said front tyre provided with a belt structure (6) comprising a layer of metal circumferential cords (7) distributed with a progressively increasing density from the equatorial plane towards the belt ends and a rear tyre provided with a belt structure (6) comprising a layer of metal circumferential cords (7) distributed with a constant density.

## Patentansprüche (Patentansprüche für folgende(n) Vertragsstaat(en): AT, BE, CH, DK, ES, FR, GR, IE, IT, LI, LU, NL, PT)

1. Reifen (1) für Zweiradfahrzeuge mit einem Querkrümmungskoeffizienten mit einem Wert von nicht weniger als 0,15, der eine torusförmige Karkasse (2) mit einer zentralen Umfangskrone und zwei Seitenwänden, die in einem Paar von Wulsten (4) zur Befestigung des Reifens (1) an einer entsprechenden Montagefelge enden, eine Lauffläche (8), die sich koaxial um die Umfangskrone erstreckt, und einen Gürtelaufbau (6) umfasst, der zwischen der Karkasse (2) und der Lauffläche (8) angeordnet ist, wobei die Karkasse (2) wenigstens eine gummierte Gewebelage (3) umfasst, die mit Verstärkungscords (3') versehen ist, **dadurch gekennzeichnet, dass** die Verstärkungscords (3') textile Cords mit einer Nummer zwischen 420/2 und 840/2 dtex sind, und dass das die Cords (3') enthaltende gummierte Gewebe (3) einen Elastizitätsmodus zwischen 100.000 MPa/cm und 200.000 MPa/cm hat.

2. Reifen (1) nach Anspruch 1, **dadurch gekennzeichnet, dass** die textilen Cords (3') aus einem Material hergestellt sind, das aus der Gruppe gewählt ist, die Aaramid, Polyethylenterephthalat (PET), Polyvinylalkohol (PVA) und Polyethylennaphthalen-2,6-Dicarboxylat (PEN) umfasst.

3. Reifen (1) nach Anspruch 1, **dadurch gekennzeichnet, dass** die textilen Cords (3') aus Polyethylennaphthalen-2,6-Dicarboxylat (PEN) hergestellt sind.

4. Reifen (1) nach Anspruch 1 oder 2, **dadurch gekennzeichnet, dass** die Dichte der textilen Cords (3') in dem Gewebe (3) zwischen 125 Cords/dm und 280 Cords/dm liegt.

5. Reifen (1) nach Anspruch 1, **dadurch gekennzeichnet, dass** die Nummer der Cords (3') 550/2 dtex ist.

6. Reifen (1) nach Anspruch 1, **dadurch gekennzeichnet, dass** die Karkasse (2) ein Paar der gummierten Gewebelagen (3) umfasst, wobei die Cords (3') parallel zueinander in jeder Lage (3) angeordnet sind und sich mit denen der angrenzenden Lage schneiden, wobei die Cords in Richtungen verlaufen, die bezüglich der Äquatorialebene (X-X) des Reifens (1) symmetrisch geneigt sind.

7. Reifen (1) nach Anspruch 6, **dadurch gekennzeichnet, dass** der Neigungswinkel der Cords (3') bezüglich der Äquatorialebene des Reifens (1) gemessen an der Umfangskrone an der Ebene zwischen 70° und 90° beträgt.

8. Reifen (1) nach Anspruch 1, **dadurch gekennzeichnet, dass** er einen Gürtel (6) umfasst, der von einer radial äußeren Schicht, die mit einer Vielzahl von Windungen (7a) von Cords (7) versehen ist, die in einem Nullwinkel bezüglich der Äquatorialebene des Reifens (1) angeordnet sind, und von eine radial inneren Schicht (9) gebildet, die ein Paar von radial übereinanderliegenden Streifen (9a, 9b) von gummiertem Gewebe umfasst, das mit verstärkenden Elementen (9c) versehen ist, die in eine Elastomermatrix eingearbeitet sind, parallel zueinander in jedem Streifen (9a, 9b) verlaufen, sich miteinander in angrenzenden Streifen schneiden und bezüglich der Äquatorialebene des Reifens (1) in Winkeln zwischen 18° und 50° geneigt sind.

9. Reifen (1) nach Anspruch 8, **dadurch gekennzeichnet, dass** die Streifen (9, 9b) an der Äquatorialebene in einer Zone unterbrochen sind, die eine Breite von vorzugsweise zwischen 10% und 30% der axialen Erstreckung des Gürtels (6) hat.

10. Reifen (1) nach Anspruch 1, **dadurch gekennzeichnet, dass** er einen Gürtel (6) umfasst, der von einer radial äußeren Schicht, die mit einer Vielzahl von Windungen (7a) von Cords (7) versehen ist, die in einem Nullwinkel bezüglich der Äquatorialebene des Reifens (1) angeordnet sind, und einer radial inneren Schicht (9) gebildet wird, die von einer Bahn aus Elastomermaterial gebildet wird, das Bindemittel umfasst, die in dem Elastomermaterial der Bahn dispergiert sind.

11. Reifen (1) nach Anspruch 10, **dadurch gekennzeichnet, dass** die Bahn aus Elastomermaterial eine Dicke zwischen 0,075 und 0,5 mm aufweist, und dass das Bindemittel aus einer Aramidpaste besteht.

12. Reifen (1) nach Anspruch 1, **dadurch gekennzeichnet, dass** die Lauffläche (8) aus einer Mischung mit einem Härtefaktor von zwischen 50° und 60° Shore A besteht.

13. Motorrad, das mit einem Paar von Reifen, einem Vorderreifen beziehungsweise einem Hinterreifen ausgestattet ist, die einen Querkrümmungskoeffizienten mit einem Wert mit nicht weniger als 0,15 aufweisen, wobei jeder Reifen eine torusförmige Karkasse (2) mit einer zentralen Umfangskrone und zwei Seitenwänden, die einem Paar von Wulsten (4) zur Befestigung des Reifens an einer entsprechenden Montagefelge enden, eine Lauffläche (8), die sich koaxial um die Umfangskrone erstreckt, und einen Gürtelaufbau (6) umfasst, der zwischen der Karkasse (2) und der Lauffläche (8) angeordnet ist, wobei die Karkasse (2) wenigstens eine gummierte Gewebelage (3) umfasst, die mit Verstärkungscords (3') versehen ist, **dadurch gekennzeichnet, dass** wenigstens die Karkasse (2) des Vorderreifens ein gummiertes Gewebe (3) umfasst, in das textile Cords (3') mit einer Nummer von zwischen 420/2 und 840/2 dtex eingearbeitet sind und das einen Elastizitätsmodus von zwischen 100.000 MPa/cm und 200.000 MPa/cm aufweist.

14. Motorrad nach Anspruch 13, **dadurch gekennzeichnet, dass** wenigstens die Karkasse (2) des Vorderrades ein Paar der gummierten Gewebelagen umfasst.

15. Motorrad nach Anspruch 13, **dadurch gekennzeichnet, dass** es den Vorderreifen, der mit einem Gürtelaufbau (6) versehen ist, der eine Schicht aus Umfangscords (7) aus Metall umfasst, die mit einer progressiv ansteigenden Dichte von der Äquatorialebene bis zu den Gürtelenden verteilt sind, und ein Hinterrad umfasst, das mit einem Gürtelaufbau (6) versehen ist, der eine Schicht aus Umfangscords (7) aus Metall umfasst, die mit einer konstanten Dichte verteilt sind.

## Patentansprüche (Patentansprüche für folgende(n) Vertragsstaat(en): DE, GB)

1. Reifen (1) für Zweiradfahrzeuge mit einem Querkrümmungskoeffizienten mit einem Wert von nicht weniger als 0,15, der eine torusförmige Karkasse (2) mit einer zentralen Umfangskrone und zwei Seitenwänden, die in einem Paar von Wulsten (4) zur Befestigung des Reifens (1) an einer entsprechenden Montagefelge enden, eine Lauffläche (8), die sich koaxial um die Umfangskrone erstreckt, und einen Gürtelaufbau (6) umfasst, der zwischen der Karkasse (2) und der Lauffläche (8) angeordnet ist, wobei die Karkasse (2) wenigstens eine gummierte Gewebelage (3) umfasst, die mit Verstärkungscords (3') versehen ist, **dadurch gekennzeichnet, dass** die Verstärkungscords (3') textile Cords mit einer Nummer zwischen 420/2 und 840/2 dtex sind, dass das die Cords (3') enthaltende gummierte Gewebe (3) einen Elastizitätsmodus zwischen 100.000 MPa/cm und 200.000 MPa/cm hat, und dass die textilen Cords (3') in dem Gewebe (3) eine Dichte zwischen 125 Cords/dm und 280 Cords/dm haben.

2. Reifen (1) nach Anspruch 1, **dadurch gekennzeichnet, dass** die textilen Cords (3') aus einem Material hergestellt sind, das aus der Gruppe gewählt ist, die Aaramid, Polyethylenterephthalat (PET), Polyvinylalkohol (PVA) und Polyethylennaphthalen-2,6-Dicarboxylat (PEN) umfasst.

3. Reifen (1) nach Anspruch 1, **dadurch gekennzeichnet, dass** die textilen Cords (3') aus Polyethylennaphthalen-2,6-Dicarboxylat (PEN) hergestellt sind.

4. Reifen (1) nach Anspruch 1, **dadurch gekennzeichnet, dass** die Nummer der Cords (3') 550/2 dtex ist.

5. Reifen (1) nach Anspruch 1, **dadurch gekennzeichnet, dass** die Karkasse (2) ein Paar der gummierten Gewebelagen (3) umfasst, wobei die Cords (3') parallel zueinander in jeder Lage (3) angeordnet sind und sich mit denen der angrenzenden Lage schneiden, wobei die Cords in Richtungen verlaufen, die bezüglich der Äquatorialebene (X-X) des Reifens (1) symmetrisch geneigt sind.

6. Reifen (1) nach Anspruch 5, **dadurch gekennzeichnet, dass** der Neigungswinkel der Cords (3') bezüglich der Äquatorialebene des Reifens (1) gemessen an der Umfangskrone an der Ebene zwischen 70° und 90° beträgt.

7. Reifen (1) nach Anspruch 1, **dadurch gekennzeichnet, dass** er einen Gürtel (6) umfasst, der von einer radial äußeren Schicht, die mit einer Vielzahl von Windungen (7a) von Cords (7) versehen ist, die in einem Nullwinkel bezüglich der Äquatorialebene des Reifens (1) angeordnet sind, und von eine radial inneren Schicht (9) gebildet, die ein Paar von radial übereinanderliegenden Streifen (9a, 9b) von gummiertem Gewebe umfasst, das mit verstärkenden Elementen (9c) versehen ist, die in eine Elastomermatrix eingearbeitet sind, parallel zueinander in jedem Streifen (9a, 9b) verlaufen, sich miteinander in angrenzenden Streifen schneiden und bezüglich der Äquatorialebene des Reifens (1) in Winkeln zwischen 18° und 50° geneigt sind.

8. Reifen (1) nach Anspruch 7, **dadurch gekennzeichnet, dass** die Streifen (9, 9b) an der Äquatorialebene in einer Zone unterbrochen sind, die eine Breite von vorzugsweise zwischen 10% und 30% der axialen Erstreckung des Gürtels (6) hat.

9. Reifen (1) nach Anspruch 1, **dadurch gekennzeichnet, dass** er einen Gürtel (6) umfasst, der von einer radial äußeren Schicht, die mit einer Vielzahl von Windungen (7a) von Cords (7) versehen ist, die in einem Nullwinkel bezüglich der Äquatorialebene des Reifens (1) angeordnet sind, und einer radial inneren Schicht (9) gebildet wird, die von einer Bahn aus Elastomermaterial gebildet wird, das Bindemittel umfasst, die in dem Elastomermaterial der Bahn dispergiert sind.

10. Reifen (1) nach Anspruch 9, **dadurch gekennzeichnet, dass** die Bahn aus Elastomermaterial eine Dicke zwischen 0,075 und 0,5 mm aufweist, und dass das Bindemittel aus einer Aramidpaste besteht.

11. Reifen (1) nach Anspruch 1, **dadurch gekennzeichnet, dass** die Lauffläche (8) aus einer Mischung mit einem Härtefaktor von zwischen 50° und 60° Shore A besteht.

12. Motorrad, das mit einem Paar von Reifen, einem Vorderreifen beziehungsweise einem Hinterreifen ausgestattet ist, die einen Querkrümmungskoeffizienten mit einem Wert mit nicht weniger als 0,15 aufweisen, wobei jeder Reifen (1) eine torusförmige Karkasse (2) mit einer zentralen Umfangskrone und zwei Seitenwänden, die einem Paar von Wulsten (4) zur Befestigung des Reifens an einer entsprechenden Montagefelge enden, eine Lauffläche (8), die sich koaxial um die Umfangskrone erstreckt, und einen Gürtelaufbau (6) umfasst, der zwischen der Karkasse (2) und der Lauffläche (8) angeordnet ist, wobei die Karkasse (2) wenigstens eine gummierte Gewebelage (3) umfasst, die mit Verstärkungscords (3') versehen ist, **dadurch gekennzeichnet, dass** wenigstens die Karkasse (2) des Vorderreifens ein gummiertes Gewebe (3) umfasst, in das textile Cords (3') mit einer Nummer von zwischen 420/2 und 840/2 dtex eingearbeitet sind und das einen Elastizitätsmodus von zwischen 100.000 MPa/cm und 200.000 MPa/cm aufweist, und dass die textilen Cords (3') in dem Gewebe (3) eine Dichte von zwischen 125 Cords/dm und 280 Cords/dm aufweisen.

13. Motorrad nach Anspruch 12, **dadurch gekennzeichnet, dass** wenigstens die Karkasse (2) des Vorderrades ein Paar der gummierten Gewebelagen umfasst.

14. Motorrad nach Anspruch 12, **dadurch gekennzeichnet, dass** es den Vorderreifen, der mit einem Gürtelaufbau (6) versehen ist, der eine Schicht aus Umfangscords (7) aus Metall umfasst, die mit einer progressiv ansteigenden Dichte von der Äquatorialebene bis zu den Gürtelenden verteilt sind, und ein Hinterrad umfasst, das mit einem Gürtelaufbau (6) versehen ist, der eine Schicht aus Umfangscords (7) aus Metall umfasst, die mit einer konstanten Dichte verteilt sind.

## Revendications (Revendications pour l'(les) Etat(s) contractant(s) suivant(s): AT, BE, CH, DK, ES, FR, GR, IE, IT, LI, LU, NL, PT)

1. Pneumatique (1) pour véhicules à deux roues, ayant un coefficient de courbure transversale d'une valeur non inférieure à 0,15, comprenant une carcasse (2) de forme torique ayant un bombé au centre du pourtour et deux parois latérales aboutissant à une paire de talons (4) pour fixer ledit pneumatique (1) sur une jante de montage correspondante, une bande de roulement (8) s'étendant coaxialement autour dudit bombé périphérique et une structure de ceinture (6) disposée entre ladite carcasse (2) et ladite bande de roulement (8), ladite carcasse (2) comportant au moins une nappe de tissu caoutchouté (3) pourvue de fils câblés de renforcement (3'), **caractérisé en ce que** lesdits fils câblés de renforcement (3') sont des fils câblés textiles à titrage de 420/2 à 840/2 dtex et **en ce que** ledit tissu caoutchouté (3) comportant les fils câblés (3') a un module d'élasticité de 100 000 MPa/cm et 200 000 MPa/cm.

2. Pneumatique (1) selon la revendication 1, **caractérisé en ce que** lesdits fils câblés textiles (3') sont en matière choisie dans le groupe comprenant l'aramide, le poly(téréphtalate) d'éthylène (PET), l'alcool polyvinylique (PVA) et le polyéthylène naphtalène-2,6-dicarboxylate (PEN).

3. Pneumatique (1) selon la revendication 1, **caractérisé en ce que** lesdits fils câblés textiles (3') sont en polyéthylène naphtalène-2,6-dicarboxylate (PEN).

4. Pneumatique (1) selon la revendication 1 ou 2, **caractérisé en ce que** la densité desdits fils câblés textiles (3') présents dans ledit tissu (3) est de 125 fils câblés/dm à 280 fils câblés/dm.

5. Pneumatique (1) selon la revendication 1, **caractérisé en ce que** le titrage desdits fils câblés (3') est de 550/2 dtex.

6. Pneumatique (1) selon la revendication 1, **caractérisé en ce que** ladite carcasse (2) comporte une paire desdites nappes en tissu caoutchouté (3), lesdits fils câblés (3') étant disposés parallèlement les uns aux autres dans chaque nappe (3) et croisant ceux de la nappe adjacente, étant orientés dans des directions inclinées de manière symétrique par rapport au plan équatorial (X-X) du pneumatique (1).

7. Pneumatique (1) selon la revendication 6, **caractérisé en ce que** l'angle d'inclinaison desdits fils câblés (3') par rapport au plan équatorial du pneumatique (1), mesuré sur le bombé périphérique dans ledit plan, est de 70° à 90°.

8. Pneumatique (1) selon la revendication 1, **caractérisé en ce qu'**il comprend une ceinture (6) formée par une couche radialement extérieure pourvue d'une pluralité de spires (7a) de fils câblés (7) disposés suivant un angle nul par rapport au plan équatorial du pneumatique (1) et par une couche radialement interne (9) comportant une paire de bandes (9a, 9b) à superposition radiale de tissu caoutchouté pourvu d'éléments de renforcement (9c) intégrés dans une matrice d'élastomère, parallèles les uns aux autres dans chaque bande, se croisant les uns les autres dans des bandes adjacentes et inclinés par rapport au plan équatorial du pneumatique (1) suivant des angles de 18° à 50°.

9. Pneumatique (1) selon la revendication 8, **caractérisé en ce que** lesdites bandes (9a, 9b) sont interrompues dans le plan équatorial dans une zone d'une largeur de préférence de 10% à 30% de l'extension axiale de ladite ceinture (6).

10. Pneumatique (1) selon la revendication 1, **caractérisé en ce qu'**il comprend une ceinture (6) formée par une couche extérieure pourvue d'une pluralité de spires (7a) de fils câblés (7) disposés suivant un angle nul par rapport au plan équatorial du pneumatique (1) et par une couche radialement interne (9) formée par une feuille de matière élastomère contenant un moyen de liaison dispersé dans la matière élastomère de ladite feuille.

11. Pneumatique (1) selon la revendication 10, **caractérisé en ce que** ladite feuille de matière élastomère a une épaisseur de 0,075 à 0,5 mm et **en ce que** ledit moyen de liaison est constitué par une pâte aramide.

12. Pneumatique (1) selon la revendication 1, **caractérisé en ce que** ladite bande de roulement (8) est constituée par un mélange à facteur de dureté Shore A de 50° à 60°.

13. Motocyclette équipée d'une paire de pneumatiques, respectivement un pneumatique avant et un pneumatique arrière, ayant un coefficient de courbure transversale d'une valeur non inférieure à 0,15, chaque pneumatique (1) comprenant une carcasse (2) de forme torique avec un bombé au centre de son pourtour et deux parois latérales aboutissant à une paire de talons (4) servant à fixer ledit pneumatique sur une jante de montage correspondante, une bande de roulement (8) s'étendant de manière coaxiale autour dudit bombé périphérique et une structure de ceinture (6) disposée entre ladite carcasse (2) et ladite bande de roulement (8), ladite carcasse (2) comportant au moins une nappe de tissu caoutchouté (3) pourvue de fils câblés de renforcement (3'), **caractérisée en ce qu'**au moins la carcasse (2) dudit pneumatique avant comporte un tissu caoutchouté (3) contenant des fils câblés textiles (3') à titrage de 420/2 à 840/2 dtex, ayant un module d'élasticité de 100 000 MPa/cm à 200 000 MPa/cm.

14. Motocyclette selon la revendication 13, **caractérisée en ce qu'**au moins la carcasse (2) dudit pneumatique avant comporte une paire desdites nappes de tissu caoutchouté (3).

15. Motocyclette selon la revendication 13, **caractérisée en ce qu'**elle comprend ledit pneumatique avant pourvu d'une structure de ceinture (6) comportant une couche de fils câblés métalliques circonférentiels (7) répartis avec une densité progressivement croissante depuis le plan équatorial vers les extrémités de la ceinture et un pneumatique arrière pourvu d'une structure de ceinture (6) comportant une couche de fils câblés métalliques circonférentiels (7) répartis avec une densité constante.

## Revendications (Revendications pour l'(les) Etat(s) contractant(s) suivant(s): DE, GB)

1. Pneumatique (1) pour véhicules à deux roues, ayant un coefficient de courbure transversale d'une valeur non inférieure à 0,15, comprenant une carcasse (2) de forme torique ayant un bombé au centre du pourtour et deux parois latérales aboutissant à une paire de talons (4) pour fixer ledit pneumatique (1) sur une jante de montage correspondante, une bande de roulement (8) s'étendant coaxialement autour dudit bombé périphérique et une structure de ceinture (6) disposée entre ladite carcasse (2) et ladite bande de roulement (8), ladite carcasse (2) comportant au moins une nappe de tissu caoutchouté (3) pourvue de fils câblés de renforcement (3'), **caractérisé en ce que** lesdits fils câblés de renforcement (3') sont des fils câblés textiles à titrage de 420/2 à 840/2 dtex, et **en ce que** ledit tissu caoutchouté (3) contenant les fils câblés (3') a un module d'élasticité de 100 000 MPa/cm à 200 000 MPa/cm, et **en ce que** lesdits fils câblés textiles (3') présents dans ledit tissu (3) ont une densité de 125 fils câblés/dm à 280 fils câblés/dm.

2. Pneumatique (1) selon la revendication 1, **caractérisé en ce que** lesdits fils câblés textiles (3') sont en matière choisie dans le groupe comprenant l'aramide, le poly(téréphtalate) d'éthylène (PET), l'alcool polyvinylique (PVA) et le polyéthylène naphtalène-2,6-dicarboxylate (PEN).

3. Pneumatique (1) selon la revendication 1, **caractérisé en ce que** lesdits fils câblés textiles (3') sont en polyéthylène naphtalène-2,6-dicarboxylate (PEN).

4. Pneumatique (1) selon la revendication 1, **caractérisé en ce que** le titrage desdits fils câblés (3') est de 550/2 dtex.

5. Pneumatique (1) selon la revendication 1, **caractérisé en ce que** ladite carcasse (2) comporte une paire desdites nappes en tissu caoutchouté (3), lesdits fils câblés (3') étant disposés parallèlement les uns aux autres dans chaque nappe (3) et croisant ceux de la nappe adjacente, étant orientés dans des directions inclinées de manière symétrique par rapport au plan équatorial (X-X) du pneumatique (1).

6. Pneumatique (1) selon la revendication 5, **caractérisé en ce que** l'angle d'inclinaison desdits fils câblés (3') par rapport au plan équatorial du pneumatique (1), mesuré sur le bombé périphérique dans ledit plan, est de 70° à 90°.

7. Pneumatique (1) selon la revendication 1, **caractérisé en ce qu'**il comprend une ceinture (6) formée par une couche radialement extérieure pourvue d'une pluralité de spires (7a) de fils câblés (7) disposés suivant un angle nul par rapport au plan équatorial du pneumatique (1) et par une couche radialement interne (9) comportant une paire de bandes (9a, 9b) à superposition radiale de tissu caoutchouté pourvu d'éléments de renforcement (9c) intégrés dans une matrice d'élastomère, parallèles les uns aux autres dans chaque bande (9a, 9b), se croisant les uns les autres dans des bandes adjacentes et inclinés suivant des angles de 18° à 50° par rapport au plan équatorial du pneumatique (1).

8. Pneumatique (1) selon la revendication 7, **caractérisé en ce que** lesdites bandes (9a, 9b) sont interrompues dans le plan équatorial dans une zone d'une largeur de préférence de 10% à 30% de l'extension axiale de ladite ceinture (6).

9. Pneumatique (1) selon la revendication 1, **caractérisé en ce qu'**il comprend une ceinture (6) formée par une couche extérieure pourvue d'une pluralité de spires (7a) de fils câblés (7) disposées suivant un angle nul par rapport au plan équatorial du pneumatique (1) et par une couche radialement interne (9) formée par une feuille de matière élastomère contenant un moyen de liaison dispersé dans la matière élastomère de ladite feuille.

10. Pneumatique (1) selon la revendication 9, **caractérisé en ce que** ladite feuille de matière élastomère a une épaisseur de 0,075 à 0,5 mm et **en ce que** ledit moyen de liaison est constitué par une pâte aramide.

11. Pneumatique (1) selon la revendication 1, **caractérisé en ce que** ladite bande de roulement (8) est constituée par un mélange à facteur de dureté Shore A de 50° à 60°.

12. Motocyclette équipée d'une paire de pneumatiques, respectivement un pneumatique avant et un pneumatique arrière, ayant un coefficient de courbure transversale d'une valeur non inférieure à 0,15, chaque pneumatique (1) comprenant une carcasse (2) de forme torique avec un bombé au centre de son pourtour et deux parois latérales aboutissant à une paire de talons (4) servant à fixer ledit pneumatique sur une jante de montage correspondante, une bande de roulement (8) s'étendant de manière coaxiale autour dudit bombé périphérique et une structure de ceinture (6) disposée entre ladite carcasse (2) et ladite bande de roulement (8), ladite carcasse (2) comportant au moins une nappe de tissu caoutchouté (3) pourvue de fils câblés de renforcement (3'), **caractérisée en ce qu'**au moins la carcasse (2) dudit pneumatique avant comporte un tissu caoutchouté (3) contenant des fils câblés textiles (3') à titrage de 420/2 à 840/2 dtex, ayant un module d'élasticité de 100 000 MPa/cm à 200 000 MPa/cm, et **en ce que** lesdits fils câblés textiles (3') présents dans ledit tissu (3) ont une densité de 125 fils câblés/dm à 280 fils câblés/dm.

13. Motocyclette selon la revendication 12, **caractérisée en ce qu'**au moins la carcasse (2) dudit pneumatique avant comporte une paire desdites nappes de tissu caoutchouté (3).

14. Motocyclette selon la revendication 12, **caractérisée en ce qu'**elle comprend ledit pneumatique avant pourvu d'une structure de ceinture (6) comportant une couche de fils câblés métalliques circonférentiels (7) répartis avec une densité progressivement croissante depuis le plan équatorial vers les extrémités de la ceinture et un pneumatique arrière pourvu d'une structure de ceinture (6) comportant une couche de fils câblés métalliques circonférentiels (7) répartis avec une densité constante.
